**Europäisches Patentamt**

(19) **European Patent Office**

**Office européen des brevets**

(11) Veröffentlichungsnummer: **0 224 000 B1**

(12) **EUROPÄISCHE PATENTSCHRIFT**

(45) Veröffentlichungstag der Patentschrift:
**13.12.89**

(51) Int. Cl.⁴: **B01D 29/00, B01D 35/18**

(21) Anmeldenummer: **86114137.2**

(22) Anmeldetag: **13.10.86**

(54) **Filtriervorrichtung, insbesondere Nutschenfilter.**

(30) Priorität: **22.10.85 CH 4543/85**

(43) Veröffentlichungstag der Anmeldung:
**03.06.87 Patentblatt 87/23**

(45) Bekanntmachung des Hinweises auf die Patenterteilung:
**13.12.89 Patentblatt 89/50**

(84) Benannte Vertragsstaaten:
**BE DE FR GB NL SE**

(56) Entgegenhaltungen:
**DE-A- 1 761 955**
**DE-A- 3 338 572**
**DE-C- 485 499**
**FR-A- 1 386 427**

(73) Patentinhaber: **Zschokke Wartmann AG,
CH-5312 Döttingen(CH)**

(72) Erfinder: **Rüegg, Heinz, Rebmoosweg 73d,
CH-5200 Brugg(CH)**

(74) Vertreter: **EGLI-EUROPEAN PATENT ATTORNEYS,
Horneggstrasse 4, CH-8008 Zürich(CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung betrifft eine Filtriervorrichtung, insbesondere Nutschenfilter, zum Filtrieren von Suspensionen, welche eine in einem zylinderförmigen Gehäuse angeordnete waagrechte Filterfläche aufweist, die auf dem Boden des Gehäuses abgestützt und als von einem Filtertuch bedeckte Lochfläche oder als eine poröse Platte ausgebildet ist, wobei die Filterfläche druck- oder vakuumbeaufschlagbar ist.

Von den Filtriervorrichtungen, die in absatzweisem Betrieb arbeiten, stellen Nutschenfilter eine bekannte Ausführungsform dar. In diesen findet im wesentlichen eine Oberflächen-Filtration statt, wobei auch Suspensionen mit noner Feststoffkonzentration verarbeitet werden können. Ein Nutschenfilter weist eine waagrechte Filterfläche auf, die als ein mit Filtertuch bespanntes Sieb oder als feste, poröse Platte ausgebildet ist. Auf der Filterfläche findet eine Oberflächen-Filtraton statt wobei sich während der Filtrierung auf der Filterfläche eine Feststoffschicht zunehmender Dicke bildet, die periodisch entfernt werden muss. Für das Austragen dieses Feststoffes sind verschiedene Verfahren bekannt. Ausser dem Umkippen der Nutschen, Abklappen des Bodens, ist es auch bekannt, den sich auf der Filteroberfläche bildenden Filterkuchen auszuschaufeln, wobei hierfür eine Austragvorrichtung eingesetzt werden kann. Hierbei ist es bekannt, als Austragvorrichtung ein Rührwerk zu verwenden, das ausser dem Austrag des Filterkuchens auch zum Glattstreichen der sich im Filterkuchen bildenden Risse verwendet werden kann.

Ist es auch erforderlich, den Filterkuchen in dem Nutschenfilter zu trocknen, kann dies durch Einbau einer Heizung erfolgen. Hierzu ist es bekannt, für das Zuführen der notwendigen Wärme Heizschlangen am Gehäuse der Filtriervorrichtung anzubringen. Auch ist es bekannt, auf der Unterseite des Bodens, auf dem die Filterfläche abgestützt ist, einen Hohlraum vorzusehen, der durch ein Heizmedium beaufschlagt wird. Diese unter dem Gehäuseboden angeordnete Heizung stellt eine verhältnismässig aufwendige Lösung dar, denn es müssen hierbei eine Anzahl Durchgänge vorgesehen werden, die als Ablauf zum Abführen des Filtrates dienen.

Hier setzt die Erfindung ein, der die Aufgabe zugrunde liegt, eine Filtriervorrichtung der eingangs beschriebenen Art so auszugestalten, dass am Gehäuseboden eine wirkungsvolle Heiz- oder Kühlvorrichtung vorgesehen werden kann, die einerseits einen intensiven Wärmeübergang an dem gesamten Gehäuseboden ermöglicht, andererseits jedoch mit verhältnismässig geringem Aufwand herstellbar ist.

Diese Aufgabe wird gemäss der Erfindung dadurch gelöst, dass auf dem Gehäuseboden Leitungen verlegt sind, auf denen die Filterfläche abgestützt ist und zwischen denen Ablaufkanäle für das Filtrat gebildet sind.

Dadurch, dass die Leitungen auf dem Gehäuseboden verlegt sind, wird erreicht, dass ohne zusätzlichen Aufwand auch die Ablaufkanäle für das Filtrat gebildet werden können.

Zweckmässig sind hierbei die Leitungen aus halbschalenförmigen Profilstäben geformt, deren Längsränder auf dem Gehäuseboden aufgesetzt und mit demselben, zum Beispiel durch Schweissung, verbunden sind.

Die Erfindung ist in der Zeichnung in einem Ausführungsbeispiel dargestellt und nachfolgend beschrieben. Es zeigen

Fig. 1 einen Querschnitt eines schematisch dargestellten Nutschenfilters,

Fig. 2 einen Querschnitt des Bodens für ein nicht dargestelltes Gehäuse eines Nutschenfilters und

Fig. 3 eine Draufsicht des Bodens nach Fig. 2 in verkleinertem Massstab.

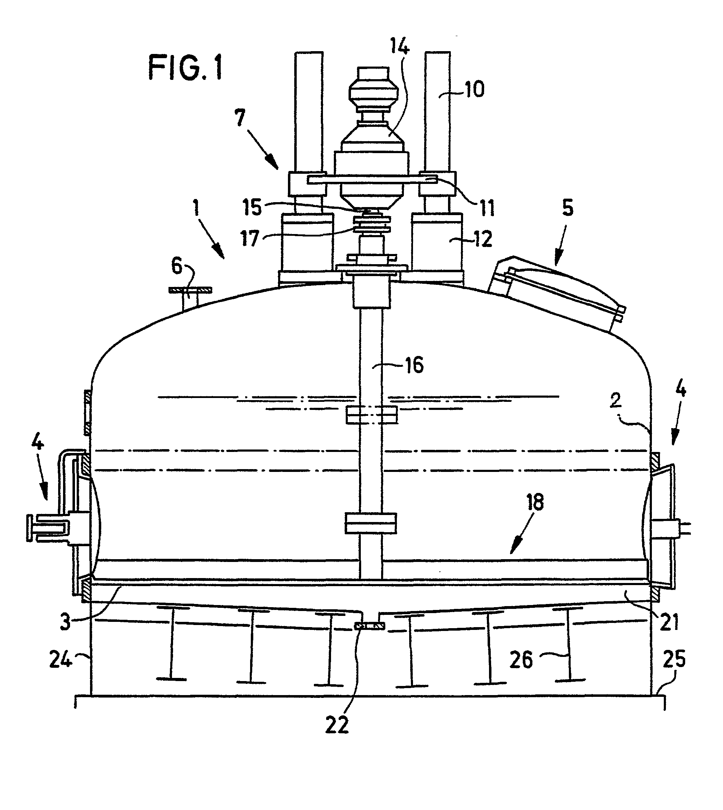

In Fig. 1 ist ein Nutschenfilter bekannter Bauart schematisch dargestellt, an welchem die nachfolgend zu beschreibende Erfindung anwendbar ist. Das gesamthaft mit 1 bezeichnete Nutschenfilter weist ein Gehäuse 2 auf, das im allgemeinen zylinderförmig ausgebildet ist. Das Gehäuse 2 ist durch einen waagrecht angeordneten Boden 3 abgeschlossen. In Fig. 1 ist der Boden nicht lösbar mit dem Gehäuse 2 verbunden. Aus diesem Grund sind in der Gehäusewand zwei Verschlüsse 4 vorgesehen, durch welche der sich im Innern des Gehäuses 2 bildende Filterkuchen entfernt werden kann. Ein weiterer Verschluss 5 ist auf der Deckelpartie angeordnet, der den Zugang zum Gehäuseinnern ermöglicht. Auf der Deckelpartie des Gehäuses 2 ist ausserdem ein Leitungsanschluss 6 vorgesehen, durch den zum Beispiel die zu filtrierende Suspension in das Gehäuseinnere eingebracht wird.

Auf dem Boden 3 des Gehäuses 2 ist eine nicht dargestellte Filterfläche abgestützt, die in bekannter Weise als ein mit einem Filtertuch bespanntes Sieb oder als feste, poröse Platte ausgebildet sein kann. Die Art der Ausbildung der Filterfläche ist im Zusammenhang mit der vorliegenden Erfindung ohne Bedeutung, weshalb nicht näher darauf eingegangen wird.

Auf der Deckelpartie des Gehäuses 2 ist eine Hubvorrichtung 7 abgestützt. Diese setzt sich aus zwei Hydraulik- Linearmotoren 10 zusammen, welche durch eine Verbindungsplattform 11 miteinander verbunden sind. Die Linearmotoren 10 sind auf Stutzen 12 befestigt, die auf der Deckelpartie des Gehäuses 2 abgestützt sind.

Auf der Verbindungsplattform 11 ist ein motorischer Antrieb 14, zum Beispiel ein elektrischer Getriebemotor, befestigt, an dessen Antriebswelle 15 eine Rührerwelle 16 mit einer Kupplung 17 gekuppelt ist. An dem unteren Ende der Rührerwelle 16 ist ein nicht näher erläutertes Rührwerk 18, zum Beispiel eine Anzahl Schaufeln, befestigt. Das Rührwerk 18 kann zwei Aufgaben übernehmen, das Glattstreichen des Filterkuchens einerseits und das Austragen des Filterkuchens andererseits.

Der Boden 3 weist nicht dargestellte Durchgänge auf, durch die das Filtrat in einen Filtratablauf 21 fliesst. Der Filtratablauf 21 ist als ein unter dem Boden 3 angeordneter Hohlraum ausgebildet, aus welchem das Filtrat durch einen im Zentrum angeordneten Ablauf stutzen 22 abgeleitet werden kann.

Der Boden 3 ist am Aussenumfang mit einer ringförmigen Wand 24 versehen, die einen Fuss 25 aufweist, mit welchem das Nutschenfilter auf einer Unterlage abstützbar ist. Zur Verstärkung des Bodens 3 sind Stege 26 aus einem Doppel-T-Profil angeordnet.

Für den Betrieb des Filters nach Fig. 1 ist es wesentlich, dass das Rührwerk 18 mit Hilfe der Hubvorrichtung 7 entsprechend der Oberfläche des sich bildenden Filterkuchens anhebbar ist. Der Boden 3 ist bei der Ausführung nach Fig. 1 nicht entfernbar mit dem Gehäuse 2 verbunden, doch kann der Boden 3 auch mit einem Flansch versehen werden, mit dem der Boden 3 mit einem entsprechend angeordneten Flansch am unteren Ende des Gehäuses 2 zusammengeschraubt werden kann. Das in Fig. 1 dargestellte Nutschenfilter ist als Druckfilter ausgebildet. Wird es nur als Vakuumfilter eingesetzt, braucht die Deckelpartie nicht als Abschluss des Gehäuses ausgebildet zu werden, sondern kann weggelassen werden, wobei dann die Hubvorrichtung 7 auf einer an dem Gehäuse 2 abgestützten Traverse oder einem Ständer befestigt sein kann.

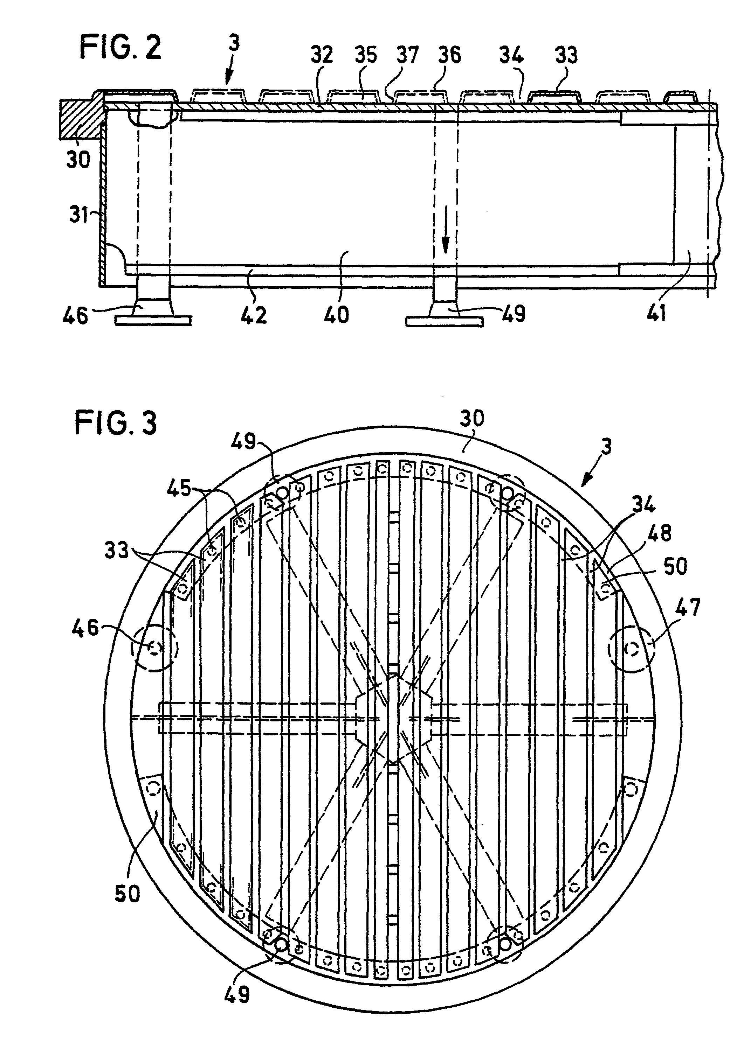

In Fig. 2 und 3 ist der Boden 3 einer Filternutsche dargestellt, die beispielsweise mit einem Gehäuse 2 gemäss Fig. 1 durch eine Flanschvorrichtung verbunden sein kann. Zu diesem Zweck weist der Boden 3 einen Befestigungsflansch 30 auf, der eine Ringwand 31 an ihrem oberen Ende umgibt und mit einer Bodenplatte 32 verbunden ist. Auf der Oberseite der Bodenplatte 32 sind Profilstäbe 33 parallel zu einander angeordnet, wobei zwischen den einzelnen Profilstäben 33 jeweils ein Zwischenraum 34 freigelassen wird. Wie aus Fig. 3 ersichtlich ist, ist die Bodenplatte 32 dadurch durch eine Anzahl paralleler Profilstäbe 33 abgedeckt, durch die nur verhältnismässig kleine Zwischenräume 34 freigelassen werden.

Die Profilstäbe weisen ein halbschalenförmiges Profil auf und bilden zusammen mit der Bodenplatte 32 eine geschlossene Leitung mit einem schmalen, angenähert rechteckigen Durchgang 35. Das Profil der Profilstäbe 33 weist zweckmässig U-Form auf, dessen Steg 36 eine wesentlich grössere Breite aufweist als die Höhe der Schenkel 37. Durch diese Form bilden die Stege 36 auf der Bodenplatte 33 einen Boden, der lediglich durch die schmalen Zwischenräume 34 unterbrochen ist. Auf dem durch die Stege 36 gebildeten Boden wird die Filterfläche abgestützt, die, wie bereits erwähnt wurde, beispielsweise ein mit einem Filtertuch bespanntes Sieb oder eine feste, poröse Platte ist.

Die Bodenplatte 32 ist durch radiale Rippenwände 40 ausgesteift, welche sich von einer zentralen Säule 41 bis zur Ringwand 31 erstrecken und mit Gurten 42 versehen sind.

Die von den Profilstäben 33 gebildeten Leitungen werden in Reihe geschaltet. Hierzu sind die Profilstäbe 33 an ihren Stirnseiten abgeschlossen, wobei in diesem Bereich in der Bodenplatte 32 Bohrungen 45 vorgesehen sind, die auf der Unterseite der Bodenplatte 32 miteinander so verbunden sind, dass ein einziger durchgehender Kanal entsteht. Dieser Kanal dient zur Durchleitung eines Heizmediums, welches durch einen Eintrittsstutzen 46, siehe Fig. 2, zugeführt und an einem Austrittsstutzen 47 abgeführt wird, siehe Fig. 3, der auf der gegenüberliegenden Seite der Bodenplatte 32 angeordnet ist. Durch die parallele Anordnung der Profilstäbe 33 werden ohne zusätzliche Mittel durch die Zwischenräume 34 Filtratabläufe geschaffen. Das Filtrat läuft zunächst durch diese Zwischenräume 34, sammelt sich dann in einem Umfangskanal 48, der durch die Gehäusewand begrenzt wird und fliesst durch Ablaufstutzen 49 ab, von denen mehrere am Umfang der Bodenplatte 32 vorgesehen sind.

Die Verbindung der Bohrungen 45 untereinander erfolgt beispielsweise durch ein auf der Unterseite der Bodenplatte 32 angeordnetes Kreisringstück 50. In Fig. 3 sind zwei solcher Kreisringstücke 50 einander gegenüberliegend angeordnet, in denen Verbindungskanäle angeordnet sind. Diese verbinden jeweils zwei nebeneinander liegende Profilstäbe 33 derart, dass ein einziger durchgehender Kanal gebildet wird.

Durch die beschriebene Mediumführung auf der Oberseite der Bodenplatte 32 wird eine zusätzliche Versteifung des Bodens 3 erreicht. Die Profilstäbe 33 können verhältnismässig dünnwandig ausgebildet werden, so dass ein günstiger Wärmeübergang auf die Filterfläche erreicht wird. Durch die auf der Oberfläche der Bodenplatte 32 angeordneten und mit dieser verbundenen Profilstäben wird eine wenig aufwendige Anordnung für die Führung des Mediums erreicht, da die Filtratabläufe ohne zusätzliche Mittel gebildet werden.

Die Stege 36 der Leitungen auf der Oberseite der Bodenplatte 32 decken annähernd 80 % der Bodenplatte. Dadurch wird ein intensiver Wärmeübergang sowohl beim Heizen als auch beim Kühlen erreicht.

Der beschriebene Boden kann sowohl zum Trocknen als auch zur Kristallisation eingesetzt werden und eignet sich zur Verwendung in einem Druckfilter oder einem Vakuumfilter. Hierbei kann der Kanal auch in Teilkanäle unterteilt sein, wobei dann eine der Zahl derselben entsprechende Zahl von Ein- und Austrittsstutzen vorzusehen ist.

## Patentansprüche

1. Filtriervorrichtung, insbesondere Nutschenfilter, zum Filtrieren von Suspensionen, welche eine in einem zylinderförmigen Gehäuse (2) angeordnete waagrechte Filterfläche aufweist, die auf dem Boden (3) des Gehäuses abgestützt und als eine von einem Filtertuch bedeckte Lochfläche oder eine poröse Platte ausgebildet ist, wobei die Filterfläche druck- oder vakuumbeaufschlagbar ist, dadurch gekennzeichnet, dass auf dem Gehäuseboden (32) Leitungen für ein Heiz- oder Kühlmedium verlegt sind, auf denen die Filterfläche abgestützt ist und zwischen denen Ablaufkanäle (34) für das Filtrat gebildet sind.

2. Filtriervorrichtung nach Anspruch 1, dadurch gekennzeichnet, dass die Leitungen aus halbschalenförmigen Profilstäben (33) bestehen, deren Längsränder auf einer Bodenplatte (32) aufgesetzt und mit derselben, zum Beispiel durch Schweissung, verbunden sind.

3. Filtriervorrichtung nach Anspruch 1 oder 2, dadurch gekennzeichnet, dass die Leitungen als gerade Profilstäbe (33) mit einem U-förmigen Profil ausgebildet und mit Abstand parallel zueinander angeordnet sind, wobei die Schenkel (37) zweier benachbarter Profilstäbe (33) die Wände eines gegen die Filterfläche offenen Kanals (34) als Ablauf für das Filtrat bilden.

4. Filtriervorrichtung nach Anspruch 2 oder 3, dadurch gekennzeichnet, dass die von den Profilstäben (33) gebildeten Durchgänge (34) in Serie miteinander verbunden sind und einen einzigen Kanal bilden.

5. Filtriervorrichtung nach einem der Ansprüche 2 bis 4, dadurch gekennzeichnet, dass der Durchgang (34) an den Stirnseiten der Profilstäbe (33) geschlossen ist und in diesem Bereich eine Bohrung (45) in der Bodenplatte (32) angeordnet ist, die auf der Unterseite der Bodenplatte durch eine Verbindungsleitung mit der entsprechenden Bohrung an der Stirnseite des benachbarten Profilstabes verbunden ist.

6. Filtriervorrichtung nach Anspruch 5, dadurch gekennzeichnet, dass der Verbindungskanal in zwei gegenüberliegenden, auf der Unterseite der Bodenplatte (32) befestigten Kreisringstücken (50) geformt ist, in welche die im Bereich der Stirnseiten aller Profilstäbe (33) in der Bodenplatte (32) angeordneten Bohrungen (45) münden, wobei jeweils zwei benachbarte Bohrungen durch einen Verbindungskanal miteinander verbunden sind.

7. Filtriervorrichtung nach einem der Ansprüche 3 bis 6, dadurch gekennzeichnet, dass der die Schenkel (37) der U-förmigen Profilstäbe (33) verbindende Steg (36) eine Auflage für die Filterfläche bildet und breiter ist als die Höhe der Schenkel (37), so dass der Durchgang annähernd ein langgestrecktes, liegendes Rechteck bildet.

## Claims

1. Filtration device, in particular of the Nutsche type, for filtering suspensions which has a horizontal filter surface arranged in a cylindrical shaped housing (2) which is supported on the floor (3) of the housing and which is formed as a perforated surface covered with a filter cloth or a porous plate wherein the filter surface can be subjected to pressure or vacuum, characterised in that on the housing floor (32) conduits for a heating or cooling medium are distributed on which the filter surface is supported and between which outlet channels (34) are formed for the filtrate.

2. Filtration device according to Claim 1, characterised in that the conduits consist of half shell shaped profiled bars (33) the longitudinal edges of which are set on a floor plate (32) and are connected with the same for example by welding.

3. Filtration device according to Claim 1 or 2, characterised in that the conduits are constructed as straight profiled bars (33) with a U-shaped profile and are arranged at distances parallel one to another wherein the legs (37) of two neighbouring profiled bars (33) form the walls of a channel open towards the filter surface as an outlet for the filtrate.

4. Filtration device according to Claim 2 or 3, characterised in that the throughways (34) formed by the profiled bars (33) are connected in series with one another and form a single channel.

5. Filtration device according to one of Claims 2 to 4, characterised in that the throughway (34) is closed at the end faces of the profiled bars (33) and in this region a bore (45) is arranged in the floor plate (32) which is connected on the underside of the floor plate by means of a connection conduit with the corresponding bore at the end face of the neighbouring profiled bar.

6. Filtration device according to Claim 5, characterised in that the connection channel is shaped into two oppositely lying circular ring pieces (50) fixed on the underside of the floor plate (32) into which the bores (43) arranged in the region of the end faces of all of the profiled bars (33) in the floor plate (32) debouch, wherein in each case two neighbouring bores are connected together by one connection channel.

7. Filtration device according to one of Claims 3 to 6, characterised in that the bar (36) connecting the legs (37) of the U-shaped profiled bar (33) forms a support for the filter surface and is broader than the height of the leg (37) so that the throughway substantially forms a longitudinally extended lying down rectangle.

## Revendications

1. Appareil de filtration, en particulier filtre de succion du type Nutsche, permettant la filtration de suspensions et comportant une surface filtrante horizontale qui est placée dans une enveloppe cylindrique (2) et prend appui sur le fond (3) de cette enveloppe et qui est constituée par une surface perforée recouverte d'un tissu filtrant ou par une plaque poreuse, la surface filtrante pouvant ·être soumise à l'action d'une pression ou du vide, caractérisé en ce que le fond (32) de l'enveloppe supporte des canalisations pour un milieu de chauffage ou de refroidissement sur lesquelles la surface filtrante prend appui et entre lesquelles sont formés des conduits (34) pour l'évacuation du filtrat.

2. Appareil de fitration selon la revendication 1, caractérisé en ce que les canalisations sont réalisées au moyen de barres profilées (33) en forme d'auge dont les bords longitudinaux sont appliqués contre une plaque de fond (32) à laquelle ils sont reliés par exemple par soudage.

3. Appareil de filtration selon la revendication 1 ou 2, caractérisé en ce que les canalisations sont réalisées au moyen de barres profilées rectilignes (33) ayant un profil en U et déplacées parallèlement les unes aux autres à une certaine distance les unes des autres, les ailes (37) de deux barres profilées voisines (33) constituant les parois d'un conduit (34) ouvert du côté de la surface filtrante et assurant l'évacuation du filtrat.

4. Appareil de filtration selon la revendication 2 ou 3 caractérisé en ce que les passages (34) formés par les barres profilées (33) sont reliés les uns aux autres en série et ne constituent qu'un conduit unique.

5. Appareil de filtration selon l'une des revendications 2 à 4, caractérisé en ce que le passage (34) est fermé au niveau du côté avant des barres profilées (33) et que cette zone comporte, dans la plaque de fond (32), un alésage (45) qui, du côté inférieur de la plaque de fond, est relié, par une canalisation de liaison, à l'alésage correspondant ménagé dans le côté frontal de la barre profilée voisine.

6. Appareil de filtration selon la revendication 5, caractérisé en ce que le conduit de liaison est constitué par deux pièces annulaires circulaires (50) opposées qui sont fixées sur le côté inférieur de la plaque de fond (32) et dans lesquels débouchent les alésages (45) ménagés dans la plaque de fond (32) dans la zone des côtés frontaux de toutes les barres profilées (33), deux alésages voisins étant toujours reliés par un conduit de liaison.

7. Appareil de filtration selon l'une des revendication 3 à 6, caractérisé en ce que l'âme (36) qui relie les ailes (37) des barres profilées (33) en formes d'U constitue un appui pour la surface filtrante et est plus large que la hauteur des ailes (37), de sorte que le passage a une section transversale en forme de rectangle allongé couché.

FIG.1

FIG. 2

FIG. 3